# DEMANDE DE BREVET EUROPEEN

(11) **EP 3 651 063 A1**
(43) Date de publication de la demande: **13.05.2020**
(21) Numéro de dépôt: 19207551.3
(22) Date de dépôt: 06.11.2019
(51) Int. Cl.: G06K 9/00

(54) **PROCÉDÉ DE RECONNAISSANCE BIOMÉTRIQUE**

(30) Priorité: 06.11.2018 FR 1860228
(71) Demandeur: Idemia Identity & Security France, 92400 Courbevoie (FR)
(72) Inventeur: THUILLIER, Cédric, 92400 COURBEVOIE (FR); FOURRE, Joël-Yann, 92400 COURBEVOIE (FR)
(74) Mandataire: Lavialle, Bruno François Stéphane

(57) **Abrégé**

Procédé de reconnaissance biométrique, au moyen d'une unité électronique de traitement courant 10 comprenant un premier calculateur 11 et une première mémoire 12 et d'une unité électronique de traitement sécurisé 20 comprenant un deuxième calculateur 21 et une deuxième mémoire 22, le procédé comprenant les étapes de réaliser une première partie des étapes de reconnaissance par l'unité de traitement courant et une deuxième partie des étapes de reconnaissance par l'unité électronique de traitement sécurisé.

Dispositif pour la mise en œuvre de ce proccédé.

## Description

La présente invention concerne le domaine de la reconnaissance biométrique.

### Arrière-plan technologique

Il est connu des procédés de reconnaissance biométrique mis en œuvre par exemple à des fins d'identification d'un individu ou de vérification du droit de l'individu à accéder à un lieu ou à des informations. La reconnaissance biométrique est basée sur la présence, sur le corps de chaque individu, de motifs biométriques qui lui sont propres. Ces motifs biométriques sont par exemple constitués par l'agencement des crêtes de la peau au niveau des doigts ou des paumes de mains (dermatoglyphes) qui forment les empreintes digitales ou palmaires, l'aspect des iris, l'aspect du visage... Ces motifs sont dits biométriques car on peut en extraire des caractéristiques, notamment géométriques et dimensionnels, permettant de distinguer un motif biométrique d'un autre.

Un procédé de reconnaissance biométrique comprend classiquement une phase d'enrôlement et une phase de reconnaissance.

La phase d'enrôlement comprend les étapes de :
- capturer un motif biométrique sur une partie de corps d'un utilisateur de référence (c'est-à-dire un utilisateur destiné à être autorisé à accéder au lieu ou aux informations dont on souhaite protéger l'accès),
- extraire des caractéristiques représentatives du motif biométrique (on parle alors de caractéristiques biométriques),
- enregistrer les caractéristiques biométriques dans un support de données (comme une mémoire d'un système informatique, une mémoire d'une carte à circuit intégré, une mémoire d'un circuit qui fonctionne en champ proche et est incorporé à un document d'identité comme un passeport...) .
La phase de reconnaissance comprend les étapes de :
- capturer un motif biométrique sur une partie de corps d'un candidat à la reconnaissance (c'est-à-dire une personne souhaitant accéder au lieu ou aux informations dont l'accès est protégé),
- extraire des caractéristiques représentatives du motif biométrique du candidat,
- calculer un score de similarité en comparant les caractéristiques biométriques du candidat aux caractéristiques biométriques mémorisées dans le support de données,
- valider la reconnaissance si le score de similarité est supérieur à un seuil de validation.

Plus le nombre de caractéristiques biométriques utilisées pour la comparaison est grand, plus la reconnaissance est fiable. Ceci suppose de :
- disposer d'un grand nombre de caractéristiques biométriques mémorisées,
- détecter un grand nombre de caractéristiques biométriques sur le candidat, et
- disposer de ressources de calcul suffisamment importantes pour calculer un score de similarité en comparant un nombre élevé de caractéristiques biométriques entre elles.

En outre, il est envisagé de mettre en œuvre un tel procédé de reconnaissance biométrique sur des appareils électroniques comprenant une unité électronique de traitement courant et une unité électronique de traitement sécurisé.

L'unité électronique de traitement courant comporte un premier calculateur et une première mémoire pour réaliser des opérations courantes.

L'unité électronique de traitement sécurisé comporte un deuxième calculateur et une deuxième mémoire pour réaliser des opérations de sécurité. Le deuxième calculateur et la deuxième mémoire font généralement partie d'un microcontrôleur sécurisé couramment appelé « secure élément » et agencé pour exécuter des programmes de sécurité tels que des programmes de chiffrement ou de cryptographie. Un inconvénient de tels microcontrôleurs sécurisés est qu'il dispose de ressources de calcul et de mémorisation limitées, ce qui limite le nombre de caractéristiques biométriques qu'ils sont capables de traiter.

Pour mettre en œuvre un procédé de reconnaissance biométrique avec un appareil du type précité, n'existent actuellement que deux possibilités :
- soit considérer la reconnaissance biométrique comme une opération courante et utiliser un grand nombre de caractéristiques biométriques traitées par l'unité électronique de traitement courant,
- soit considérer la reconnaissance biométrique comme une opération sécurisée et utiliser un nombre limité de caractéristiques biométriques traitées par l'unité électronique de traitement sécurisé.

Dans les deux cas, il existe un risque quant à la robustesse de la reconnaissance biométrique.

### Objet de l'invention

Un but de l'invention est de permettre de sécuriser la mise en œuvre d'un procédé de reconnaissance biométrique.

### Bref exposé de l'invention

A cet effet, on prévoit, selon l'invention un procédé de reconnaissance biométrique, au moyen d'une unité électronique de traitement courant comprenant un premier calculateur et une première mémoire et d'une unité électronique de traitement sécurisé comprenant un deuxième calculateur et une deuxième mémoire, le procédé comprenant les étapes de :
- lors d'une phase préalable d'enrôlement,
   - détecter un motif biométrique sur une partie de corps d'un utilisateur de référence et extraire des descripteurs de référence du motif biométrique et des coordonnées géométriques de référence de chaque descripteur,
   - enregistrer dans la première mémoire les descripteurs de référence,
   - enregistrer dans la deuxième mémoire les coordonnées géométriques de référence de manière à établir un lien logique entre chacun des descripteurs de référence et les coordonnées géométriques de référence qui lui correspondent ;
- lors d'une phase de reconnaissance,
   - détecter un motif biométrique sur une partie de corps d'un candidat et extraire des descripteurs candidats du motif biométrique et des coordonnées géométriques candidates de chaque descripteur candidat,
   - faire comparer, par le premier calculateur, les descripteurs candidats aux descripteurs de référence pour identifier des descripteurs candidats reconnus et des coordonnées géométriques candidates reconnues,
   - faire sélectionner, par le deuxième calculateur, les coordonnées géométriques de référence des descripteurs de référence correspondant aux descripteurs candidats reconnus,
   - déterminer un sous-ensemble d'associations entre des coordonnées géométriques candidates reconnues avec des coordonnées géométriques de référence sélectionnées,
   - valider la reconnaissance si le sous-ensemble est cohérent.

Ainsi, une première partie du procédé de reconnaissance biométrique est prise en charge par l'unité électronique de traitement courant et une deuxième partie du programme de reconnaissance biométrique est prise en charge par l'unité électronique de traitement sécurisé. Comme la vérification de cohérence est décisive pour la reconnaissance biométrique et est effectuée par l'unité électronique de traitement sécurisé, un fraudeur ne peut tromper la reconnaissance biométrique en accédant uniquement à l'unité électronique de traitement courant puisqu'il n'aura pas alors accès aux coordonnées géométriques de référence ni à l'algorithme de vérification de cohérence. En outre, les coordonnées géométriques sont des données de taille plus faible que les descripteurs : il en résulte que leur traitement demande moins de ressources informatiques de sorte que le risque d'une saturation de l'unité électronique de traitement sécurisé est faible.

L'invention a également pour objet un dispositif pour la mise en œuvre de ce procédé.

D'autres caractéristiques et avantages de l'invention ressortiront à la lecture de la description qui suit de deux modes de mise en œuvre particuliers et non limitatifs de l'invention.

### Brève description des dessins

Il sera fait référence aux dessins annexés, parmi lesquels :
- la figure 1 est une vue schématique d'un terminal adapté pour un premier mode de mise en œuvre du procédé de l'invention ;
- la figure 2 est une vue schématique d'un système informatique adapté pour un deuxième mode de mise en œuvre du procédé de l'invention.

### Description détaillée de l'invention

L'invention est ici décrite en application à la reconnaissance biométrique à partir d'empreintes digitales. Bien évidemment, l'invention est applicable à d'autres types de caractéristiques biométriques et notamment celles extraites des empreintes palmaires, des iris, ou du visage d'un utilisateur.

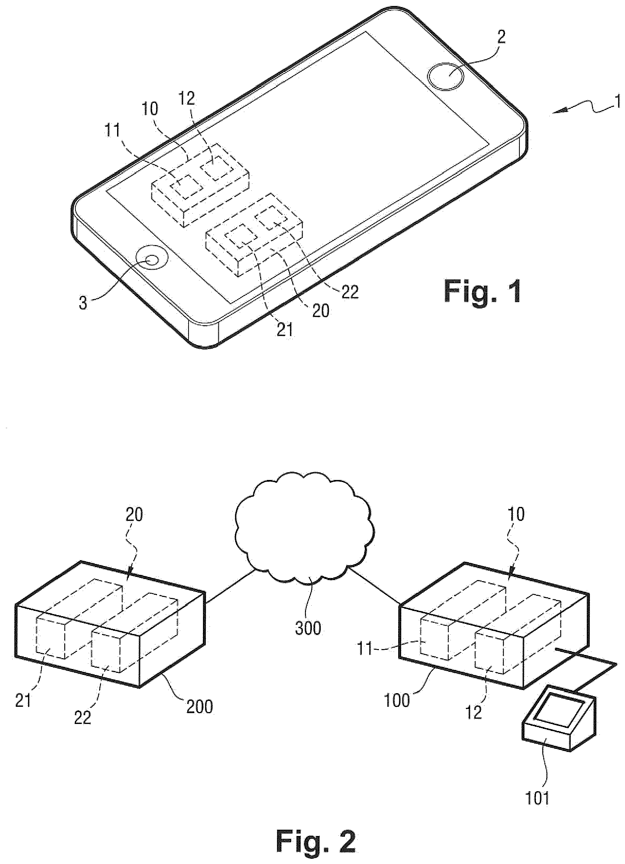

A la figure 1 est représenté un appareil ou terminal de télécommunication généralement désigné en 1, ici un ordiphone (plus couramment appelé « smartphone »), qui comprend, de manière connue en elle-même, une caméra 2, un capteur d'empreinte 3, une unité électronique de traitement courant 10 et une unité électronique de traitement sécurisé 20.

L'unité électronique de traitement courant 10 (ici un microcontrôleur ou MCU) comprend un premier calculateur 11 et une première mémoire 12. L'unité électronique de traitement courant 10 est agencée et programmée, de manière connue en elle-même, pour exécuter des tâches courantes comme par exemple : se connecter au réseau cellulaire pour téléphoner ou naviguer sur le réseau Internet ; lire des vidéos ou de la musique ; gérer des comptes ; servir de traitement de texte, de tableur, de calculatrice ; capturer et modifier des images... A cette fin, l'unité électronique de traitement courant 10 exécute un programme d'exploitation lui permettant de gérer le fonctionnement de toutes les ressources du terminal de télécommunication 1 (caméra 2, batterie, écran, circuit d'émission/réception de signaux radiofréquences, récepteur de signaux satellites de géolocalisation, mémoire...) et des programmes (ou applications) dédiés à la réalisation de tâches particulières (traitement de texte, capture d'image, navigation sur le réseau Internet, jeux...). Certains de ces programmes dédiés peuvent commander une opération d'authentification qui sera exécutée par l'unité électronique de traitement sécurisé 20.

L'unité électronique de traitement sécurisé 20 (couramment appelée SE) comprend un deuxième calculateur 21 et une deuxième mémoire 22. L'unité électronique de traitement sécurisé 20 est agencée et programmée, de manière connue en elle-même, pour constituer un dispositif électronique du type couramment appelé « secure element » prenant en charge l'exécution des tâches de sécurité comme la gestion des mots de passe et le chiffrement notamment en vue d'effectuer des opérations d'authentification pour déverrouiller le terminal de télécommunication et/ou faire du terminal de télécommunication un moyen de paiement sans contact et/ou un moyen de paiement en ligne par exemple sur le réseau Internet. L'unité électronique de traitement sécurisé 20 est agencée de manière connue en elle-même pour être conforme aux spécifications publiées par l'organisation GLOBALPLATFORM.

L'unité électronique de traitement courant 10 et l'unité électronique de traitement sécurisé 20 sont reliées entre elles de manière à pouvoir échanger des données. L'unité électronique de traitement sécurisé 20 est également reliée directement à un circuit d'émission/réception de signaux radiofréquences du terminal de communication 1 pour pouvoir se connecter au serveur informatique d'un organisme dit tiers de confiance intervenant dans les opérations de paiement et échanger des données avec ce serveur informatique sans les faire transiter par l'unité électronique de traitement courant 10.

Selon l'invention, le terminal de télécommunication 1 est programmé pour mettre en œuvre un procédé de reconnaissance biométrique.

Ce procédé de reconnaissance biométrique comprend une phase préalable d'enrôlement et une phase de reconnaissance.

Lors de la phase préalable d'enrôlement, le procédé comprend les étapes de :
- détecter un motif biométrique sur une partie de corps d'un utilisateur de référence et extraire des descripteurs de référence du motif biométrique et des coordonnées géométriques de référence de chaque descripteur,
- enregistrer dans la première mémoire 12 les descripteurs de référence,
- enregistrer dans la deuxième mémoire 22 les coordonnées géométriques de référence de manière à établir un lien logique entre chacun des descripteurs de référence et les coordonnées géométriques de référence qui lui correspondent.

Le motif biométrique est ici une empreinte digitale et le capteur d'empreinte 3 peut être un capteur optique qui fournit une image binaire du motif biométrique au premier calculateur 11. D'autres types de capteur comme un capteur capacitif, un capteur ultrasonique, un capteur à semi-conducteur, un capteur de champ électrique... sont utilisables.

Cette image est ensuite traitée pour détecter le motif biométrique puis extraire du motif biométrique des descripteurs correspondant à des points d'intérêt du motif biométrique et des coordonnées géométriques de ces points d'intérêt. Les points d'intérêt sont par exemple sélectionnés à partir des extrema de l'image (minima ou maxima). Le calculateur 11 met ici en œuvre un algorithme de type SIFT ou SURF pour extraire les descripteurs de référence dont le nombre est compris entre 100 et 200. Les descripteurs de référence concernent par exemple la forme locale du motif géométrique (arche, tourbillon, boucle, fourche, fin de ligne, île...) ou un gradient local... Les coordonnées géométriques de référence sont mesurées dans un repère prédéfini positionné par rapport aux bords du motif biométrique ou au centre de celui-ci. Les coordonnées géométriques comprennent une abscisse, une ordonnée et éventuellement un angle de la ligne formant le motif biométrique au point d'intérêt.

Avantageusement, plusieurs images du motif biométriques sont capturées et les points d'intérêts sélectionnés sont ceux apparaissant sur plusieurs de ces images.

Le lien logique est ici un index. Chaque descripteur de référence et les coordonnées géométriques de référence qui lui correspondent sont enregistrés respectivement dans la première mémoire 12 et la deuxième mémoire 22 avec le même index. Il est possible également de transformer l'index par une fonction injective cryptographique ou non.

Lors de la phase de reconnaissance, le procédé comprend les étapes de :
- détecter un motif biométrique sur une partie de corps d'un candidat et extraire des descripteurs candidats du motif biométrique et des coordonnées géométriques candidates de chaque descripteur candidat ;
- faire comparer, par le premier calculateur 11, les descripteurs candidats aux descripteurs de référence pour identifier des descripteurs candidats reconnus et des coordonnées géométriques candidates reconnues ;
- faire sélectionner, par le deuxième calculateur 21, les coordonnées géométriques de référence des descripteurs de référence correspondant aux descripteurs candidats reconnus ;
- faire vérifier, par le deuxième calculateur 21, une cohérence d'un ensemble des coordonnées géométriques candidates reconnues avec un ensemble des coordonnées géométriques de référence sélectionnées ;
- valider la reconnaissance si les deux ensembles sont cohérents.

La détection du motif biométrique candidat et l'extraction des descripteurs candidats en association avec leurs coordonnées géométriques sont réalisées comme précédemment.

Un descripteur candidat est reconnu s'il correspond à un descripteur de référence. La comparaison des descripteurs entre eux est effectuée de manière classique et comprend par exemple le calcul d'un score de similarité pour chaque association de descripteurs. Le score de similarité peut être comparé directement à un seuil, ou on calcule la différence entre le meilleur score de similarité et le deuxième meilleur score de similarité et on compare cette différence à un seuil.

La liste des coordonnées géométriques candidates reconnues (c'est-à-dire des coordonnées candidates des descripteurs candidats reconnus) associées chacune avec l'index du descripteur de référence correspondant est ensuite transmise par le premier calculateur 11 à l'unité électronique de traitement sécurisé 20.

Le deuxième calculateur 21 sélectionne ensuite les coordonnées de référence ayant un index figurant dans la liste des coordonnées géométriques candidates reconnues pour former l'ensemble des coordonnées géométriques de référence sélectionnées.

On dispose alors d'un ensemble d'associations comportant chacune des coordonnées géométriques de référence et des coordonnées géométriques candidates. L'algorithme utilisé est agencé pour trouver dans cet ensemble un sous-ensemble présentant une cohérence, c'est-à-dire qu'il existe une unique transformation simple du plan permettant de passer des coordonnées géométriques de référence de ce sous-ensemble aux coordonnées géométriques candidates. Le procédé est ici conçu pour tester successivement des transformations constituées chacune par une rotation ou une translation. Pour chaque transformation, les associations séparées après transformation par une distance inférieure à un seuil prédéterminé sont conservées et forment un sous-ensemble. La transformation donnant le sous-ensemble le plus grand est retenue et ledit sous-ensemble est considéré comme cohérent. En variante, l'algorithme recherche des cohérences entre les associations deux à deux en recherchant la transformation permettant de passer des coordonnées géométriques de référence aux coordonnées géométriques candidates d'une association et en calculant la distance séparant les coordonnées géométriques candidates d'une autre association et les coordonnées obtenues par l'application de la transformation aux coordonnées géométriques de référence de ladite autre association. Cette distance est représentative de la cohérence entre les deux associations. La transformation est choisie parmi les transformations suivantes : translations, rotations, similitudes, transformations affines, homographies...

Selon une première variante du premier mode de mise en oeuvre, l'invention est mise en œuvre avec un appareil ou terminal de télécommunication, ici un ordiphone (plus couramment appelé « smartphone »), qui comprend, de manière connue en elle-même, une caméra, un capteur d'empreinte, une unité électronique de traitement courant et un lecteur de carte à circuit intégré. L'appareil est agencé pour fonctionner en association avec une carte à circuit intégré intégrant une unité électronique de traitement sécurisé.

Le fonctionnement est identique à celui préalablement décrit, la seule différence étant que la liste des coordonnées géométriques candidates reconnues associées chacune avec l'index du descripteur de référence correspondante est transmise par le premier calculateur 11 hors de l'appareil, à l'unité électronique de traitement sécurisé 20, pour que cette dernière effectue la vérification de cohérence et la validation.

Selon une deuxième variante, le circuit intégré de la carte comprend l'unité électronique de traitement courant et l'unité électronique de traitement sécurisé 20. L'appareil comprend un capteur d'empreinte, un lecteur de carte à circuit intégré et une unité électronique de traitement pour transmettre les caractéristiques biométriques à la carte qui assure l'ensemble des traitements.

Selon une troisième variante, le circuit intégré de la carte comprend l'unité électronique de traitement courant et l'unité électronique de traitement sécurisé 20. La carte comprend en outre un capteur d'empreinte relié au circuit intégré. La carte assure alors la capture de l'empreinte et tous les traitements subséquents.

Dans le deuxième mode de mise en œuvre représenté à la figure 2, l'unité électronique de traitement courant 10 et l'unité électronique de traitement sécurisé 20 appartiennent respectivement à deux appareils distincts 100, 200 reliés l'un à l'autre par un réseau de données 300 comme le réseau Internet.

Les appareils 100 et 200 sont ici deux ordinateurs mais peuvent avoir des structures différentes. En particulier, l'appareil 100 peut être un terminal de télécommunication.

L'appareil 100 est relié à un capteur d'empreinte digitale 101.

L'appareil 100 n'a aucune spécificité particulière si ce n'est d'exécuter un programme mettant en œuvre le procédé de l'invention.

Les appareils 100 et 200 ont une architecture logicielle dite HCE (de l'anglais Host Card Emulation ») permettant à l'appareil 100 de transférer des données au serveur 200 qui va les traiter à la manière d'un microcontrôleur sécurisé de type « Secure Element ».

La mise en œuvre du procédé de l'invention est identique à celle précédemment décrite et comprend les étapes de :
- détecter un motif biométrique sur une partie de corps d'un candidat au moyen du capteur d'empreinte 101 et extraire des descripteurs candidats du motif biométrique et des coordonnées géométriques candidates de chaque descripteur candidat ;
- faire comparer, par le premier calculateur 11, les descripteurs candidats aux descripteurs de référence pour identifier des descripteurs candidats reconnus et des coordonnées géométriques candidates reconnues ;
- transférer au deuxième calculateur 22 les index des descripteurs candidats reconnus ou une fonction de correspondance sous la forme d'une injection des index ;
- faire sélectionner, par le deuxième calculateur 21, les coordonnées géométriques de référence des descripteurs de référence correspondant aux index des descripteurs candidats reconnus ;
- faire vérifier, par le deuxième calculateur 21, la cohérence de l'ensemble des coordonnées géométriques candidates reconnues avec l'ensemble des coordonnées géométriques de référence sélectionnées ;
- valider la reconnaissance si les deux ensembles sont cohérents.

L'enrôlement peut, lui, avoir été fait à partir du capteur d'empreinte 101 de l'appareil 100 ou bien à partir d'un capteur d'empreinte relié à l'appareil 102.

• Bien entendu, l'invention n'est pas limitée aux modes de mise en œuvre décrits mais englobe toute variante entrant dans le champ de l'invention telle que définie par les revendications.

En particulier, d'autres appareils peuvent être utilisés pour la mise en œuvre de l'invention, comme par exemple une tablette multimédia.

Par motif biométrique, on entend tout arrangement de lignes qui est présent sur ou dans une partie de corps d'un individu et qui est propre à cet individu. Ces lignes peuvent être par exemple formées par :
- les sillons de la peau,
- des vaisseaux sanguins,
- la délimitation, sur le visage, de parties externes d'organes ou d'orifices, ou de marques (bouche, yeux, nez, tâches, cicatrices...),
- des tâches et/ou stries formées par les iris...

Les descripteurs peuvent être classés selon un ordre quelconque, par exemple de manière aléatoire.

Des descripteurs factices peuvent être ajoutés aux descripteurs de référence ou aux descripteurs candidats afin de compliquer la fraude. Ces descripteurs factices sont identifiés par exemple au moyen de l'index qui leur est associé.

Une même liste de descripteurs de référence peut comprendre des descripteurs de référence appartenant à deux empreintes distinctes. Les index sont alors de préférence utilisés pour déterminer à quelle empreinte appartient chaque descripteur.

Il est possible d'utiliser des algorithmes autres que SIFT ou SURF, comme par exemple Orb, Kaze, Akaze, Brisk...

La vérification de cohérence peut être effectuée par d'autres moyens que ceux indiqués. Il est notamment possible d'utiliser des méthodes d'appariement de points telles que les méthodes d'appariement d'ensemble de points non rigides (« Non-rigid point set registration » - https://en.wikipedia.org/wiki/Point_set_registration).

## Revendications

1. Procédé de reconnaissance biométrique, au moyen d'une unité électronique de traitement courant (10) comprenant un premier calculateur (11) et une première mémoire (12) et d'une unité électronique de traitement sécurisé (20) comprenant un deuxième calculateur (21) et une deuxième mémoire (22), le procédé comprenant les étapes de :
- lors d'une phase préalable d'enrôlement,
• détecter un motif biométrique sur une partie de corps d'un utilisateur de référence et extraire des descripteurs de référence du motif biométrique et des coordonnées géométriques de référence de chaque descripteur,
• enregistrer dans la première mémoire les descripteurs de référence,
• enregistrer dans la deuxième mémoire les coordonnées géométriques de référence de manière à établir un lien logique entre chacun des descripteurs de référence et les coordonnées géométriques de référence qui lui correspondent ;
- lors d'une phase de reconnaissance,
• détecter un motif biométrique sur une partie de corps d'un candidat et extraire des descripteurs candidats du motif biométrique et des coordonnées géométriques candidates de chaque descripteur candidat,
• faire comparer, par le premier calculateur, les descripteurs candidats aux descripteurs de référence pour identifier des descripteurs candidats reconnus et des coordonnées géométriques candidates reconnues,
• faire sélectionner, par le deuxième calculateur, les coordonnées géométriques de référence des descripteurs de référence correspondant aux descripteurs candidats reconnus,
• déterminer un sous-ensemble d'associations entre des coordonnées géométriques candidates reconnues avec des coordonnées géométriques de référence sélectionnées,
• valider la reconnaissance si le sous-ensemble est cohérent.

2. Procédé selon la revendication 1, dans lequel l'unité électronique de traitement courant (10) et l'unité électronique de traitement sécurisé (20) font partie d'un unique appareil (1).

3. Procédé selon la revendication 2, dans lequel l'appareil (1) est un terminal de communication sans fil.

4. Procédé selon la revendication 1, dans lequel l'unité électronique de traitement courant (10) et l'unité électronique de traitement sécurisé (20) appartiennent à deux appareils distincts (100, 200).

5. Procédé selon la revendication 1, dans lequel au moins l'unité électronique de traitement sécurisé (20) fait partie d'un circuit intégré d'une carte à circuit intégré.

6. Procédé selon l'une quelconque des revendications précédentes, dans lequel le lien logique est un index, chaque descripteur de référence et les coordonnées géométriques de référence qui lui correspondent étant enregistrés respectivement dans la première mémoire (12) et la deuxième mémoire (22) avec le même index ou une fonction appliquée à cet index.

7. Procédé selon l'une quelconque des revendications précédentes, dans lequel l'extraction des descripteurs est réalisée au moyen d'un algorithme de l'un des types suivant : SIFT, SURF, Orb, Kaze, Akaze, Brisk.

8. Procédé selon l'une quelconque des revendications précédentes, dans lequel la vérification de cohérence comprend :
- la sélection de plusieurs transformations géométriques du plan,
- l'établissement de plusieurs sous-ensembles d'associations de coordonnées, les coordonnées géométriques de référence étant liées aux coordonnées géométriques candidates par une des transformations géométriques, la transformation géométrique étant différente pour chaque sous-ensemble ;
- le calcul d'un cardinal de chaque sous-ensemble de coordonnées et la comparaison du cardinal ou d'une fonction appliquée à celui-ci à un seuil,
- le sous-ensemble retenu est celui ayant le cardinal le plus élevé et supérieur au seuil.

9. Procédé selon l'une quelconque des revendications précédentes, dans lequel la vérification de cohérence comprend la mise en œuvre d'une méthode de parcours de graphe et recherche de points voisins.

10. Dispositif comprenant au moins une unité électronique avec un premier calculateur (11) et une première mémoire (12), mettant en œuvre un programme informatique ayant des instructions agencées pour la mise en œuvre d'un procédé selon l'une quelconque des revendications précédentes.

11. Dispositif selon la revendication 10, comprenant deux unités électroniques, à savoir une unité électronique de traitement courant (10) ayant un premier calculateur (11) et une première mémoire (12), et une unité électronique de traitement sécurisé (20) ayant un deuxième calculateur (21) et une deuxième mémoire (22), les unités électroniques mettant en œuvre un programme informatique ayant des instructions agencées pour la mise en œuvre d'un procédé selon l'une quelconque des revendications 1 à 9.

12. Dispositif selon la revendication 11, comprenant un capteur d'empreinte relié l'unité électronique de traitement courant.

13. Dispositif selon la revendication 11 ou la revendication 12, le dispositif étant une carte à circuit intégré.
